Europäisches Patentamt

European Patent Office

Office européen des brevets

(11) Veröffentlichungsnummer: **0 313 978 B1**

# EUROPÄISCHE PATENTSCHRIFT

(45) Veröffentlichungstag der Patentschrift: **15.04.92**

(51) Int. Cl.⁵: **G01N 1/30**

(21) Anmeldenummer: **88117430.4**

(22) Anmeldetag: **19.10.88**

(54) **Stabilisatoren für Färbelösungen.**

(30) Priorität: **28.10.87 DE 3736490**

(43) Veröffentlichungstag der Anmeldung:
**03.05.89 Patentblatt 89/18**

(45) Bekanntmachung des Hinweises auf die
Patenterteilung:
**15.04.92 Patentblatt 92/16**

(84) Benannte Vertragsstaaten:
**BE CH DE FR GB IT LI NL**

(56) Entgegenhaltungen:
**EP-A- 0 220 438**
**US-A- 4 392 864**
**US-A- 4 741 898**

(73) Patentinhaber: **MERCK PATENT GESELL-
SCHAFT MIT BESCHRÄNKTER HAFTUNG
Frankfurter Strasse 250 Postfach 4119
W-6100 Darmstadt(DE)**

(72) Erfinder: **Rieke, Erwin, Dr.
Hermannstrasse 12
W-6104 Seeheim(DE)**
Erfinder: **Kaschek, Renate
Rossbergring 63
W-6107 Reinheim 5(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft die Stabilisierung von Blutfärbelösungen, insbesondere solchen, die Thiazinfarbstoffe enthalten.

Differentialblutbilder werden seit langem mit den bekannten Färbelösungen nach Giemsa, May-Grünwald, Leishman und Wright erzeugt. Ein wesentlicher Nachteil dieser Färbelösungen besteht darin, daß die Untersuchungsergebnisse aus verschiedenen Laboratorien aufgrund der unterschiedlichen Qualität der im Handel erhältlichen Farbstoffe nicht miteinander verglichen werden können (J.clin.Path. 28 680 (1975)). Es bestehen nicht nur große Qualitätsunterschiede zwischen den Farbstoffen verschiedener Hersteller, sondern die Farbstoffe unterliegen auch einer zeitlichen chemischen Veränderung. Die genannten Färbelösungen lassen sich wegen der Labilität insbesondere des Methylenblau-Moleküls, das vor allem in alkalischem Milieu durch oxidative Demethylierung in die nächstniederen Homologen Azur A, Azur B, Azur C und Thionin übergeht, nicht in stets gleichbleibender Qualität herstellen und daher auch nicht standardisieren. Im wesentlichen verändern sich die Färbeeigenschaften durch eine Abnahme der optischen Dichte der Thiazinkomponenten, die bei etwa 645 nm bestimmt wird. Hierdurch verschiebt sich das Blau-/Rot-Farbverhältnis kontinuierlich, was nach einiger Zeit zu nicht mehr akzeptablen Färbungen führt. Die Erhaltung der reproduzierbaren Färbeeigenschaften wird weiterhin dadurch erschwert, daß die Färbelösungen insbesondere bei niedrigen Temperaturen zur Kristallisation von Farbstoffen neigen, wobei das Eosin stärker auskristallisiert als die Thiazinkomponente. Eine Standardisierung, die auf diesem Gebiet aufgrund der zunehmenden Automation unerläßlich ist, ist mit den bekannten Blutfärbelösungen praktisch nicht möglich.

Aus der DE-OS 35 33 515 ist bereits bekannt, daß man durch den Zusatz von Dimethylammoniumsulfat die Stabilität von Färbelösungen stark erhöhen kann. Während nicht stabilisierte Lösungen je nach Qualität des eingesetzten Rohstoffs manchmal schon bei Raumtemperatur, meistens aber bei niedrigeren Temperaturen zu Ausfällungen von Farbstoffkristallen neigen, bleiben mit Dimethylammoniumsulfat stabilisierte Färbelösungen z.B. bei Raumtemperatur klar, im Temperaturbereich um 9 °C erfolgt jedoch in einigen Fällen Niederschlagsbildung mit Verschlechterung der Färbequalität.

Der Erfindung liegt die Aufgabe zugrunde, Stabilisatoren für Färbelösungen zur Verfügung zu stellen, die eine lange Haltbarkeit garantieren und die Ausfällung von Farbstoffen bei niedrigen Temperaturen verhindern, allgemein vergleichbare Ergebnisse aufweisen und in geringen Konzentrationen wirksam sind.

Gegenstand der Erfindung sind somit Färbelösungen, enthaltend Farbstoffe und Dimethylammoniumsulfat als Stabilisator, insbesondere Färbelösungen, die Thiazinfarbstoffe oder Mischungen aus Thiazinfarbstoffen mit weiteren Farbstoffen enthalten, die dadurch gekennzeichnet sind, daß als Stabilisator zusätzlich mindestens ein Kristallisationsinhibitor enthalten ist. Als Kristallisationsinhibitoren eignen sich vorzugsweise Glycerin, Polyethylenglykol, Ethylenglykol und/oder dessen aliphatische Ether, insbesondere Ethylenglykol, Glycerin oder Polyethylenglykol mit einem Molekulargewicht bis zu etwa 300. Solche erfindungsgemäß stabilisierten Färbelösungen finden Verwendung zum Anfärben biologischer Materialien in der Hämatologie, Zytologie und Histologie.

Es wurde gefunden, daß insbesondere die Kombination von Dimethylammoniumsulfat mit Ethylenglykol oder Glycerin oder Polyethylenglykol 200 die Ausfällungen von Farbstoffkristallen zuverlässig verhindert. Bei Zusatz von Polyethylenglykol 300 und aliphatischen Ethern des Glykols wie Ethylenglykolmonoethylether, Ethylenglykolmonoisopropylether, Ethylenglykolmonobutylether, Ethylenglykolmonomethylether, Ethylenglykoldimethylether zeigten die Lösungen im Temperaturbereich um 9 °C geringfügige Spuren von Niederschlägen, aber keine nachweisbare Abnahme der optischen Dichte nach 3 Monaten Lagerung. Werden die genannten Kristallisationsinhibitoren ohne Dimethylammoniumsulfat den Färbelösungen zugesetzt, so wird zwar die Niederschlagsbildung hinausgezögert, aber nicht verhindert.

Der Anteil des Stabilisators Dimethylammoniumsulfat in der Färbelösung beträgt in der Regel 0,05 bis 1,5 Gew.-%, bezogen auf die Gesamtlösung, vorzugsweise 0,1 bis 0,6 Gew.-%, insbesondere 0,2 Gew.-%.

Der Anteil des Kristallisationsinhibitors beträgt in der Regel 1 bis 15 Gew.-% bezogen auf die Gesamtlösung, vorzugsweise 3 - 5 %, insbesondere 3 Gew.-%.

Zur Haltbarkeit der erfindungsgemäßen Färbelösungen wurden Vergleichsversuche durchgeführt. Dazu wurden Proben einer frisch angesetzten May-Grünwalds Eosin-Methylenblau-Lösung ohne Dimethylammoniumsulfat (DAS) und ohne Kristallisationsinhibitor (KI), ohne DAS mit KI, mit DAS ohne KI und mit 0,1 % DAS und jeweils 3 % verschiedener KI untersucht. Die Abnahme der Färbeleistung bei verschiedenen Lagertemperaturen wurde durch die Messung der optischen Dichten bei 645 nm (Thiazinkomponente) und 523 nm (Eosin) verfolgt. Außerdem wurde die Menge an Niederschlägen visuell verfolgt.

Es zeigte sich, daß nach längerer Lagerungszeit bei niedrigen Temperaturen die Färbelösungen ohne Ethylenglykol, Glycerin oder Polyethylenglykol völlig unbrauchbar werden, während die Lösungen mit der erfindungsgemäßen Stabilisatorkombination noch nach 32 Wochen auch unterhalb von 9 °C sehr gute Werte aufweisen. Durch die Ausfällung von Farbstoffkristallen bei niedrigen Temperaturen in Lösungen ohne die erfindungsgemäße Stabilisatorkombination, wird die Färbung nicht nur schwächer, sondern das Färbebild wird blauer, da fast doppelt soviel Eosin ausfällt wie Thiazinfarbstoff. Lösungen ohne Zusatz haben nach 4 Wochen Lagerung bei 9 °C oder kälter eine Azurabnahme von 29-39 % und eine Eosinabnahme von 46-60 % und färben nicht mehr ausreichend, während Lösungen mit der erfindungsgemäßen Stabilisatorkombination nach 32 Wochen Lagerung bei 9 °C oder kälter unverändert waren.

Nach der Erfindung sind neue stabilisierte Färbelösungen zugänglich, die eine sehr hohe Haltbarkeit aufweisen. Diese erfindungsgemäß stabilisierten Färbelösungen werden zum Anfärben in der Hämatologie, Zytologie und Histologie verwendet.

Beispiel 1

Herstellung einer stabilisierten May-Grünwalds Eosin-Methylenblau-Lösung

Man löst 0,2 g Dimethylammoniumsulfat im Gemisch aus 97 ml Methanol und 3 ml Ethylenglykol, stellt auf einen pH-Wert von 7,9 ein, gibt 0,12 g May-Grünwalds Eosin-Methylenblau (MERCK) zu und rührt 3 Stunden. Dann wird die Lösung filtriert.

Während im Temperaturbereich von 9 bis -25 °C ohne Ethylenglykol bereits nach 2 Wochen Niederschläge auftreten und die optische Dichte (645 nm/523 nm) von 1,62 nach 8 Wochen auf 2,63 steigt, ist sie im vorliegenden Fall konstant bei 1,62.

Beispiel 2

Herstellung einer erfindungsgemäß stabilisierten Leishmans Eosin-Methylenblau-Lösung

Man löst 0,2 g Dimethylammoniumsulfat im Gemisch aus 97 ml Methanol und 3 ml Glycerin, stellt auf einen pH-Wert von 7,9 ein, gibt 0,12 g Leishmans Eosin-Methylenblau (MERCK) zu, rührt 18 Stunden und filtriert dann die Lösung.

Die optische Dichte (625 nm/523 nm) dieser Lösung ist 1,34; auch bei dieser Lösung treten ohne Stabilisierung bereits nach 2 Wochen Niederschläge auf; die optische Dichte steigt nach 8 Wochen auf 1,51.

Beispiel 3

Herstellung einer Färbelösung mit Azur B und Eosin

Man löst 0,2 g Dimethylammoniumsulfat im Gemisch aus 97 ml Methanol und 3 ml Polyethylenglykol 200, stellt auf einen pH-Wert von 7,5 ein, gibt 0,1 g Azur B (MERCK) und 0.12 g Eosin (MERCK) zu und rührt 18 Stunden. Dann wird die Lösung filtriert.

Während im Temperaturbereich von 9 bis -25 °C ohne Polyethylenglykol 200 bereits nach 2 Wochen Niederschläge auftreten und die optische Dichte (637 nm/523 nm) innerhalb von 8 Wochen von 1,40 auf 1,77 steigt, ist die optische Dichte der stabilisierten Lösung konstant bei 1,40.

Beispiel 4

Herstellung einer Wrights Eosin-Methylenblau-Lösung

Man löst 0,2 g Dimethylammoniumsulfat im Gemisch aus 97 ml Methanol und 3 ml Ethylenglykolmonobutylether, stellt auf einen pH-Wert von 7,7 ein, gibt 0,24 g Wrights Eosin-Methylenblau (MERCK) zu und rührt 18 Stunden. Dann wird die Lösung filtriert.

Analog Beispiel 3 treten nach 2 Wochen Niederschläge auf und die optische Dichte (646 nm/523 nm) steigt innerhalb von 8 Wochen von 1,68 auf 2,0, während die optische Dichte der stabilisierten Lösung über den gesamten Zeitraum 1,68 beträgt.

**Patentansprüche**

1. Färbelösungen, enthaltend Farbstoffe und Dimethylammoniumsulfat als Stabilisator, dadurch gekennzeichnet, daß als Stabilisator zusätzlich mindestens ein Kristallisationsinhibitor enthalten ist.

2. Färbelösungen nach Anspruch 1, dadurch gekennzeichnet, daß als Kristallisationsinhibitor Glycerin, Polyethylenglykol, Ethylenglykol und/oder dessen aliphatische Ether enthalten ist.

3. Färbelösungen nach den Ansprüchen 1 und 2, dadurch gekennzeichnet, daß der Gehalt an Dimethylammoniumsulfat 0,05 bis 1,5 Gew.-%, an Kristallisationsinhibitor 1 bis 15 Gew.-% beträgt.

4. Verwendung der Färbelösungen nach den Ansprüchen 1 bis 3 zum Anfärben biologischer Materialien in der Hämatologie, Zytologie und Histologie.

## Claims

1. Staining solutions, containing dyes and dimethylammonium sulfate as the stabilizer, characterized in that they additionally contain, as the stabilizer, at least one crystallization inhibitor.

2. Staining solutions according to Claim 1, characterized in that they contain, as crystallization inhibitor, glycerol, polyethylene glycol, ethylene glycol and/or aliphatic ethers thereof.

3. Staining solutions according to Claims 1 and 2, characterized in that the dimethylammonium sulfate content is 0.05 to 1.5% by weight and that of crystallization inhibitor is 1 to 15% by weight.

4. Use of the staining solutions according to Claims 1 to 3 for staining biological materials in haematology, cytology and histology.

## Revendications

1. Solutions de colorants, contenant des colorants et du sulfate de diméthylammonium, comme stabilisant, caractérisées en ce qu'elles contiennent en plus, comme stabilisant, au moins un inhibiteur de cristallisation.

2. Solutions de colorants, selon la revendication 1, caractérisées en ce qu'elles contiennent, comme inhibiteur de cristallisation, de la glycérine, du polyéthylèneglycol, de l'éthylèneglycol et/ou ses éthers aliphatiques.

3. Solutions de colorants selon les revendications 1 et 2, caractérisées en ce qu'elles contiennent 0,05 à 1,5 % en poids de sulfate de diméthylammonium et 1 à 15 % en poids de l'inhibiteur de cristallisation.

4. Utilisation des solutions de colorants selon les revendications 1 à 3 pour la coloration de matériaux biologiques en hématologie, cytologie et histologie.